# EUROPÄISCHE PATENTSCHRIFT

(11) **EP 1 307 365 B1**
(45) Veröffentlichungstag und Bekanntmachung des Hinweises auf die Patenterteilung: **02.11.2006**
(21) Anmeldenummer: 01956363.4
(22) Anmeldetag: 21.07.2001
(51) Int. Cl.: B60S 1/32

(54) **WISCHERARM, WISCHBLATT UND WISCHVORRICHTUNG, INSBESONDERE FÜR SCHEIBEN VON KRAFTFAHRZEUGEN**
WIPER ARM, WIPER BLADE AND WIPER DEVICE, ESPECIALLY FOR THE PANES OF A MOTOR VEHICLE
BRAS D'ESSUIE-GLACE, RACLETTE D'ESSUIE-GLACE ET DISPOSITIF ESSUIE-GLACE, EN PARTICULIER POUR VITRES DE VEHICULES AUTOMOBILES

(30) Priorität: 27.07.2000 DE 10036569; 16.01.2001 DE 10101655; 23.06.2001 DE 10130381
(43) Veröffentlichungstag der Anmeldung: 07.05.2003
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2001/002779
(87) Internationale Veröffentlichungsnummer: WO 2002/009986

(56) Entgegenhaltungen:
- EP-A- 0 343 869
- FR-A- 2 632 897
- FR-A- 2 785 248
- US-A- 3 862 465

## Beschreibung

### Stand der Technik

Die Erfindung betrifft eine Wischvorrichtung, insbesondere für Scheiben von Kraftfahrzeugen, nach Gattung des unabhängigen Anspruchs 1. Sie betrifft auch einen Wischerarm nach Anspruch 14 und ein Wischblatt nach Anspruch 20. Es sind schon zahlreiche derartige Wischvorrichtungen bekannt. Diese weisen einen Wischerarm auf, der von einem U-förmigen Profilteil gebildet ist. Der in Einbaulage in Fahrtrichtung des Fahrzeugs weisende Schenkel bildet dabei einen integrierten Spoiler aus und am weiteren Schenkel und/oder am Rücken sind Luftausströmungsöffnungen angeordnet. Ein solcher Wischerarm ist beispielsweise in der FR-A-2 632 897 gezeigt.

Der Spoiler und die Luftausströmungsöffnung können jedoch nicht verhindern, dass bei höheren Fahrgeschwindigkeiten des Kraftfahrzeugs Auftriebskräfte entstehen, die der Auflagekraft entgegenwirken, mit der das am Wischerarm befestigte Wischblatt auf die Scheibe gedrückt wird.

### Vorteile der Erfindung

Die erfindungsgemäße Wischvorrichtung mit den Merkmalen des Hauptanspruchs hat den Vorteil, dass durch Luftleitelemente, welche im Innenbereich des Profilteils angeordnet sind, ein vorteilhafter Strömungsverlauf des Fahrtwindes vorzugsweise entlang der Breite des Wischerarms erzeugt wird, der einerseits effektiv die Auflagekraft des Wischerarms bei hohen Geschwindigkeiten erhöht und gleichzeitig störende Windgeräusche eliminiert, andererseits optisch nicht störend wirkt oder die Kosten des Wischerarms wesentlich erhöht.

Durch die in den Unteransprüchen aufgeführten Maßnahmen ergeben sich vorteilhafte Weiterbildungen und Verbesserungen der im Hauptanspruch angegebenen Merkmale.

Sind die Luftausströmungsöffnungen in dem, dem Spoiler abgewandten Hinterschenkel des U-förmigen Profilteils angeordnet, so sind diese nur vom Fahrzeuginneren aus zu sehen und können trotzdem ausreichend groß gestaltet werden, um einen ausreichenden Abtrieb und damit eine ausreichende Auflagekraft zu erzeugen.

Ragt ein Luftleitelement über die Schenkel, des U-förmigen Profilteils hinaus, so ist dies von besonderem Vorteil, da auf diese Weise ausreichend Luft zur Erzeugung des Abtriebs in den Wischerarm eintreten kann. Dies gilt insbesondere dann, wenn die Luftleitelemente derart angeordnet sind, daß sie im Bereich der unteren Spoilerkante einen trichterartigen Einlaß bilden.

Weiters ist es vorteilhaft, wenn das hinausragende Luftleitelement eine weiche Gummilippe aufweist, um bei einem eventuellen Kontakt zwischen Fahrzeugscheibe und Luftleitelement Beschädigungen oder Geräusche zu vermeiden. Dadurch kann ein besonders kleiner Abstand zur Fahrzeugscheibe erreicht werden, wodurch ein noch günstigerer Strömungsverlauf erreicht wird.

Sind die Luftleitelemente so angeordnet, dass der Durchströmungsquerschnitt im Einströmungsbereich kleiner als im Ausströmungsbereich ist, wird eine optimale Sogwirkung durch den Fahrtwind erzielt.

Sind die Luftleitelemente in Einbaulage im Einströmungsbereich näher an der Scheibe als im Ausströmungsbereich, kann dieser Effekt noch verstärkt werden.

Ein optimaler Strömungsverlauf wird dann erreicht, wenn die Luftleitelemente so angeordnet sind, dass die durchströmende Luft beschleunigt wird, so daß eine leichte Sogwirkung in Richtung der Scheibe entsteht. Dieser tragflächenartige Effekt, verbessert - insbesondere bei hohen Geschwindigkeiten - das Wischergebnis deutlich.

Weiters ist es vorteilhaft, mindestens eine Luftausströmungsöffnung im Mittelschenkel des U-förmigen Profilteils anzuordnen, da damit der Strömungsquerschnitt im Ausströmungsbereich weiter vergrößert werden kann.

Ist eine Luftausströmungsöffnung in dem spoilerabgewandten Schenkel und eine weitere im Mittelschenkel angeordnet, so kann ein nahezu beliebiger Strömungsverlauf innerhalb des U-förmigen Profils und damit des Wischerarms erzielt werden.

Sind die Luftleitelemente darüber hinaus als Spritzgußteil ausgebildet, können diese kostengünstig hergestellt werden und erhöhen das Gewicht der Wischvorrichtung nur maginal. Darüber hinaus sind diese Spritzgußteile auch im Falle einer Zerstörung leicht ersetzbar.

Insbesondere ist es von Vorteil, wenn die Luftleitelemente in das Profilteil eingeclipst werden, um einen schnellen Einbau und einen schnellen Wechsel vollziehen zu können, wenn es beispielsweise zu einer Beschädigung gekommen ist.

Weiterhin ist es vorteilhaft, das Luftleitelement in das Profilteil einzukleben, um eine formschlüssige und glatte Verbindung zu erhalten und dadurch störende Geräuschentwicklungen zu vermeiden.

Besonders vorteilhaft ist es, wenn das Luftleitelement einen Ansatz zur Führung des Wischblattes aufweist, wodurch die Relativposition des Wischblattes zum Luftleitelement immer bestens eingehalten wird.

Vorteilhaft ist es insbesondere, wenn das Wischblatt als Flachbalken-Wischblatt ausgebildet ist. Die Gesamtbauhöhe zwischen Wischerarm, Spoiler und Wischblatt wird dadurch auf ein Minimum reduziert, da keine aufwendige und strömungsungünstige Bügelkonstruktion zwischen Wischblatt und Profilteil notwendig ist.

Ferner ist es vorteilhaft, wenn durch die Luftleitelemente ein trichterartiger oder doppeltrichterartiger Kanal entsteht, um einen optimalen Strömungsverlauf zu erzielen. Beim doppeltrichterartigen Kanal sind dabei die Lufteinströmöffnungen und die Luftausströmöffnungen größer als die Mitte des Kanals.

Der erfindungsgemäße Wischerarm nach Anspruch 14 hat den Vorteil, daß durch die Anordnung eines Luftleitelements im Innenbereich des U-förmigen Profilteils ein vorteilhafter Strömungsverlauf insbesondere bei hohen Strömungsgeschwindigkeiten erzielt wird.

Als vorteilhaft ist dabei anzusehen, wenn mindestens ein Luftleitelement vom Wischblatt selbst getragen und an diesem befestigt ist. Dadurch wird das Wischblatt selbst angeströmt und eine zusätzliche Auflagekraft erzeugt, die das Wischblatt auf die Scheibe drückt.

Besonders vorteilhaft ist es, wenn das Profilteil im Bereich seines Vorderschenkels eine Anströmöffnung aufweist, in die ein vom Wischblatt getragenes Luftleitelement aufgenommen ist. So wird der Spoiler der Wischblatt/Wischerarm Kombination gleichermaßen vom Wischblatt und vom Wischerarm gebildet, wodurch sich eine gleichmäßigere. Auflagekraftverteilung ergibt.

Dies ist besonders vorteilhaft, wenn die vom Wischblatt getragenen Luftleitelemente etwa bündig mit dem Vorderschenkel abschließen, so daß eine im wesentlichen ebene Spoileroberfläche entsteht.

Um die Stabilität, insbesondere gegen Verwindung zu erhöhen ist es weiterhin vorteihaft mehrere Anströmöffnungen entlang der Längserstreckung des Wischerarms vorzusehen. Zwischen den Anströmöffnungen entstehen so Stege die die Steifigkeit des Wischerarms verbessern.

Besonders vorteilhaft ist es, Düsen zum Austritt von Reinigungsflüssigkeit im Inneren des Profilteils vorzusehen. Insbesondere im Bereich des Hinterschenkels, in dem die Düsen die Luftströmung durch die vorgelagerten Luftleitelemente nur wenig stören, können auch größere, beispielsweise beheizbare Düsen angeordnet werden.

Ein erfindungsgemäßes Wischblatt mit den Merkmalen des Anspruchs 20 hat den Vorteil, daß dadurch, daß der Blattrücken mindestens ein Luftleitelement trägt, das mit einem am oder im Wischerarm angeordneten oberen Luftleitelement zusammenwirkt, optimale Anströmverhältnisse erreicht werden können. Insbesondere wird durch die direkte Antrömung des Wischblatts dieses nicht nur indirekt über den Wischerarm, sondern auch das Wischblatt selbst auf die Scheibe gedrückt.

Besonders vorteilhaft ist dabei, wenn das vom Blattrücken getragene untere Luftleitelement durch das Profilteil des Wischerarms, insbesondere durch dessen Vorderschenkel durchzutreten vermag. Auf diese Weise ist es möglich, eine ebene Spoileroberfläche am Vorderschenkel des Profilteils zu erreichen und trotzdem das Wischblatt unmittelbar anströmen zu lassen.

Hierbei ist es besonders vorteilhaft, wenn das Wischblatt mehrere Luftleitelemente entlang einer Längserstreckung trägt, da auf diese Weise die Stabilität des Wischerarms nicht eingeschränkt wird.

### Zeichnungen

Ausführungsbeispiele der Erfindung sind in den Zeichnungen dargestellt und in der nachfolgenden Beschreibung näher erläutert. Es zeigen:
Figur 1 eine erfindungsgemäße Wischvorrichtung in perspektivischer Darstellung,
Figur 2 einen Wischerarm einer erfindungsgemäßen Wischvorrichtung in perspektivischer Darstellung,
Figuren 3 bis 8 Schnitte durch Wischerarme einer erfindungsgemäßen Wischvorrichtung in verschiedenen Variationen,
Figur 9 ein Wischblatt mit Luftleitelementen in perspektivischer Darstellung,
Figur 10 das Luftleitelement aus Figur 9 im Detail,
Figuren 11 bis 16 Schnitte durch einen Wischerarm mit Wischblatt,
Figur 17 einen erfindungsgemäßen Wischerarm mit einem Wischblatt in einer perspektivischen Darstellung,
Figur 18 Wischarm und Wischblatt nach Figur 17 nach der Montage,
Figuren 19 bis 21 Querschnitte durch einen Wischerarm mit Wischblatt nach Figur 18 und
Figuren 22 bis 25 Querschnitte durch einen Wischerarm mit Wischblatt nach Figur 18 jedoch mit Düsen und diversen Kanälen.

### Beschreibung der Ausführungsbeispiele

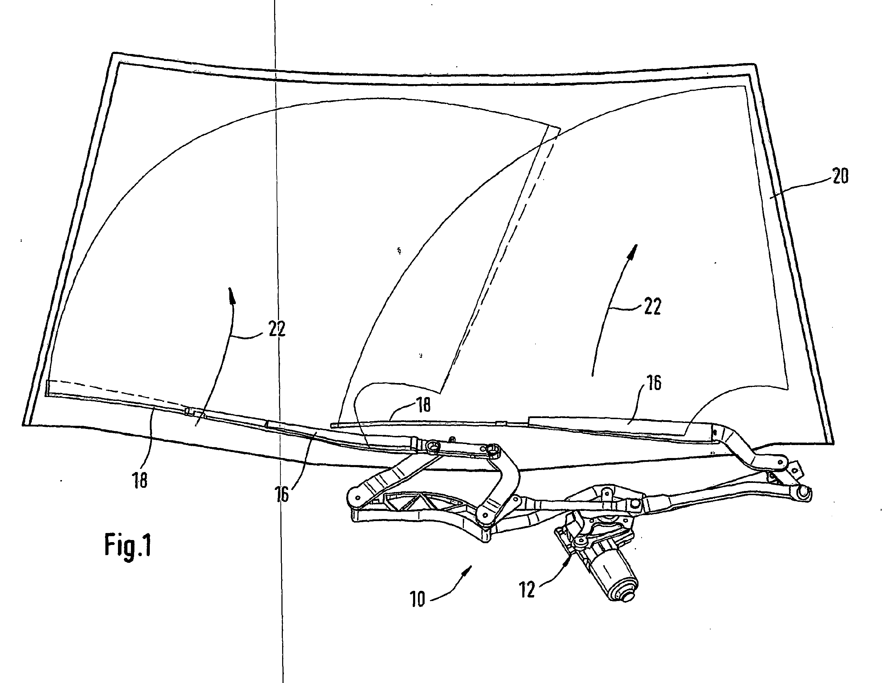

In Figur 1 ist eine Wischvorrichtung 10 in perspektivischer Darstellung gezeigt. Diese weist einen Motor 12 auf, der über ein Gestänge 14 zwei Wischarme 16 antreibt, welche an ihren Enden jeweils ein Wischblatt 18 tragen. Das Wischblatt 18 ist am Wischerarm 16 etwa parallel zur Längserstreckung desselben befestigt und wird teilweise vom Wischerarm 16 umschlossen. Natürlich ist es auch möglich, das Wischblatt 18 ganz vom Wischerarm 16 umschließen zu lassen. Das Wischblatt 18 ist hier als Flachbalken-Wischblatt ausgebildet.

Die Wischvorrichtung 10 ist als Teil eines Kraftfahrzeugs an der Karosserie desselben befestigt und läßt die Wischblätter 18 über die Windschutzscheibe 20 gleiten. Im Fahrbetrieb des Kraftfahrzeugs verursacht der Fahrtwind eine Luftströmung welche durch die Strömungspfeile 22 angedeutet ist.

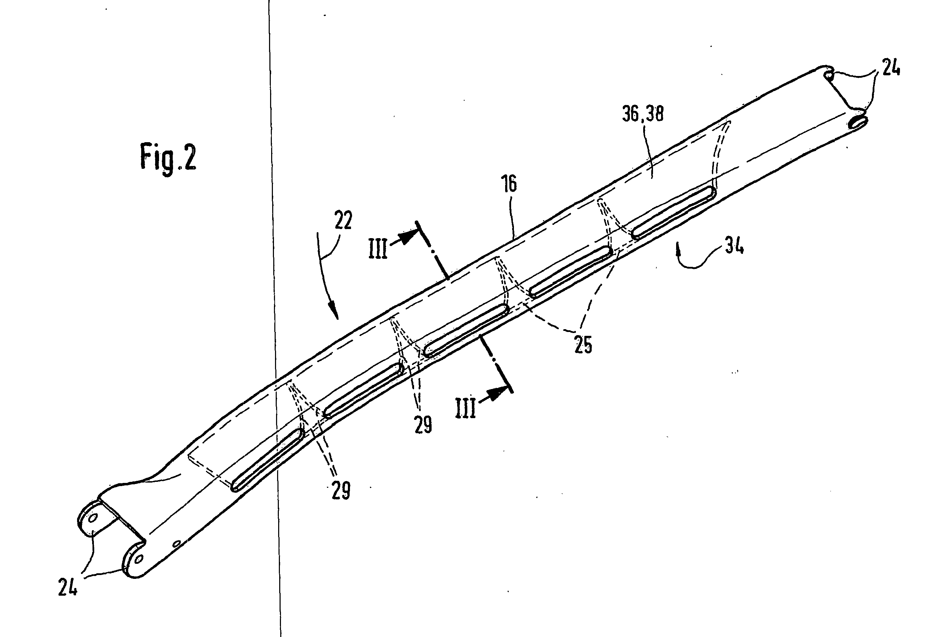

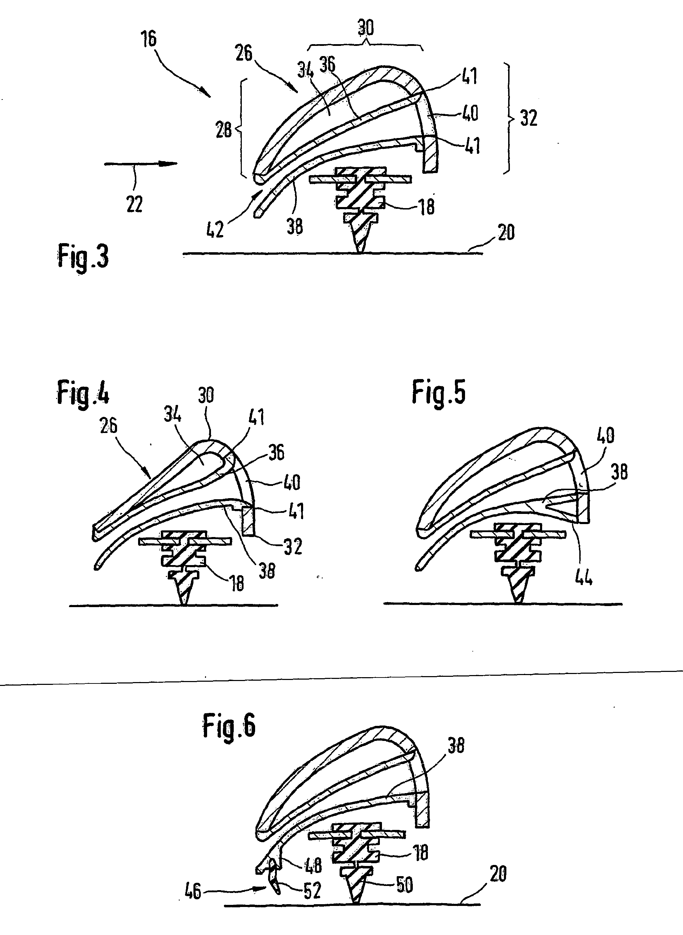

Figur 2 zeigt einen Wischerarm 16 einer erfindungsgemäßen Wischvorrichtung 10 in perspektivischer Darstellung. Die Luftanströmrichtung ist hier wiederum durch den Strömungspfeil 22 dargestellt. Der Wischerarm 16 besteht im wesentlichen aus einem U-förmigen Profilteil 26, das auf der der Luftströmung zugewandten Seite zu einem Spoiler angeschrägt ist. An den Enden seiner Längserstreckung sind Befestigungselemente 24, insbesondere Haken und/oder Ösen zur Befestigung am Gestänge 14 und am Wischblatt 18 angeordnet. Auf der der Luftströmung abgewandten Seite sind Luftausströmungsöffnungen 40 angeordnet, die durch Stege 25 voneinander getrennt sind. Im einem Innenbereich 34 des Profilteils 26 sind Luftleitelemente 36, 38 als einstückiges Spritzgußteil eingeclipst, was in der Zeichnung mittels unterbrochener Linien dargestellt ist.
Dieses Spritzgußteil ist in den Figuren 3 bis 8 im Querschnitt genauer dargestellt.

Entlang seiner Längserstreckung sind zwischen dem oberen und unteren Luftleitelement 36, 38 Seitenwände 29 angeordnet, die die einzelnen Luftausströmungsöffnungen 40 des Profilteils 26 im Inneren der Luftleitelemente 36, 38 fortsetzen. Auf der der Strömung zugewandten Seite sind diese Seitenwände 29 paarweise zusammengeführt und verhindern Strömungsturbulenzen an den zwischen den Luftausströmungsöffnungen 40 angeordneten Stegen 25. Darüber hinaus erhöhen sie die Stabilität des Spritzgußteils.

In Figur 3 ist ein Querschnitt durch den Wischerarm aus Figur 2 dargestellt. Das Profilteil 26 des Wischerarms 16 weist einen Rücken 30 auf, von dem aus sich seitlich die beiden Schenkel erstrecken. Der der Luftströmung zugewandte Schenkel ist im folgenden als Vorderschenkel 28 und der der Luftströmung abgewandte Schenkel als Hinterschenkel 32 bezeichnet. Die Luftströmung ist auch hier durch den Strömungspfeil 22 angedeutet.

Im Innenbereich 34 des U-förmigen Profilteils 26 sind Luftleitelemente 36, 38 angeordnet, welche teilweise auch über den Innenbereich 34 des Profilteils 26 hinausragen. Unterhalb des Profilteils 26 ist ein Wischblatt 18, welches als Flachbalken-Wischblatt ausgebildet ist, dargestellt. Durch die in seinem der Strömung abgewandten Schenkel 32 angeordneten Luftausströmungsöffnungen 40 kann Luft aus dem Innenbereich 34 des Profilteils 26 ausströmen.

Das obere Luftleitelement 36 ist dabei so angeordnet, dass es von der der Windschutzscheibe 20 zugewandten Unterkante des Vorderschenkels 28 zur oberen Kante der Luftausströmungsöffnung 40 reicht. Das untere Luftleitelement 38 ragt von der unteren Kante der Luftausströmungsöffnung 40 über das Wischblatt 18 hinweg tragflügelartig über das Profilteil 26 hinaus, so daß eine trichterartige Lufteinströmungsöffnung 42 entsteht. Dadurch entsteht zwischen Lufteinströmungsöffnung 42 und Luftausströmungsöffnung 40 ein Düseneffekt, der die Auflagekraft, mit der der Wischerarm 16 das Wischblatt 18 auf die Scheibe 20 drückt, verstärkt. Die Luftleitelemente 36, 38 grenzen an ihrem Ende an die Luftausströmungsöffnungen bündig an, so daß sich möglichst wenig Turbulenzen in diesem Bereich bilden.

Die Luftleitelemente 36, 38 können wie in Figur 4 dargestellt, auch so ausgebildet sein, dass sie im Bereich der Kanten der Luftausströmungsöffnung 40 mit den weiteren Schenkeln 30, 32 einen glatten, abgerundeten Übergang bilden.

Der Vorderschenkel 28, der den Spoiler bildet, kann dabei konvex oder, wie hier gezeigt, konkav geformt sein.

In Figur 5 ist gezeigt, wie das untere Luftleitelement 38 ein Strömungselement 44 aufweist, welches sich von der Unterseite des unteren Luftleitelements 38 zur Unterkante des Hinterschenkels 32 erstreckt, um ungünstige Strömungseigenschaften wie Turbulenzen in diesem Bereich zu vermeiden, ohne dabei die Strömung zur Luftausströmungsöffnung 40 zu beeinträchtigen. Natürlich kann das untere Luftleitelement 38 auf seiner Hinterseite auch so ausgebildet sein, daß zwischen Strömungselement 44 und Luftausströmungsöffnung 40 kein Hohlraum entsteht.

In Figur 6 ist das untere Luftleitelement 38 an seiner der Strömung zugewandten Seite mittels einer weichen Gummilippe 46 verlängert. Diese Gummilippe 46 ist dabei über einen Ansatz 48, beispielsweise in einem Mehrkomponenten-Spritzgußverfahren, an das untere Luftleitelement angespritzt. Die Gummilippe 46 ist dabei etwa senkrecht zur Windschutzscheibe 20 und etwa parallel zur Mittelachse des Wischblatts 18 ausgerichtet, kann aber auch ein Knie 52 aufweisen und ihren Querschnitt nach unten hin verjüngen.

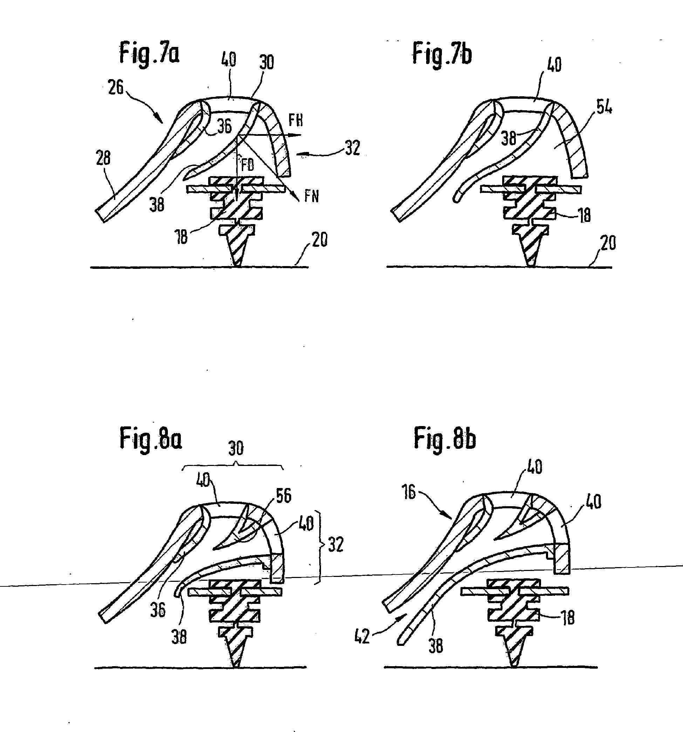

Figur 7a zeigt eine Variation eines erfindungsgemäßen Wischerarms. Das U-förmige Profilteil 26 weist dabei auf seiner der Strömung zugewandten Seite, eine konkave Wölbung auf, wobei die Unterkante des Vorderschenkels 28 näher an der Windschutzscheibe 20 liegt als das der Strömung zugewandte Ende des unteren Luftleitelements 38 und die Unterkante des Hinterschenkels 32. Die Luftausströmungsöffnung 40 ist hier im Rücken 30 angeordnet und die beiden Luftleitelemente 36, 38 sind dementsprechend in Richtung des Rückens 30 geführt.

Weiterhin ist in der Figur 7a ein Kräfteparallelogramm gezeigt, wie es durch die innenliegenden Luftleitelemente (36, 38) entsteht. Durch die Beschleunigung Luft, die durch die als trichterartigen Kanal ausgebildeten Luftleitelemente (36, 38) strömt, wirkt eine Normalkraft (FN) senkrecht zur Oberfläche des unteren Luftleitelements (38). Diese zerlegt sich in eine Druckkraft (FD), die das Wischblatt (18) in Richtung der Scheibe (20) drückt und eine Horizontalkraft (FH) die das Wischblatt (18) über die Scheibe (20) schiebt.

Wie in Figur 7b dargestellt kann das untere Luftleitelement 38 im Innenbereich 34 des Profilteils 26 so angeordnet sein, daß das Wischblatt 18 teilweise strömungsmäßig abgedeckt wird, so daß nur wenig Luft den Bereich 54 über dem Wischblatt 18 durchströmt.

In Figur 8a ist eine Variation des Ausführungsbeispiels aus Figur 7a gezeigt. Außer der Luftauströmungsöffnung 40 im Rücken 30 ist eine weitere Luftauströmungsöffnung 40 im Hinterschenkel 32 angeordnet. Um Verwirbelungen zwischen oberem und unteren Luftleitelement 36, 38 im Bereich der Luftauströmungsöffnungen 40 zu verhindern, ist zwischen diesen ein Mittenkeil 56 angeordnet, der für einen laminaren Strömungsverlauf in Richtung der beiden Luftauströmungsöffnungen 40 sorgt. Dieser Mittenkeil 56 ist als etwa dreieckiger Keil ausgebildet, dessen Fuß sich von der Oberkante der hinteren Luftauströmungsöffnung 40 bis zur hinteren Kante der oberen, im Rücken 30 angeordneten Luftauströmungsöffnung 40 erstreckt und mit diesen Kanten bündig abschließt.

In Figur 8b ist eine weitere Variation dargestellt. Wie in Figur 8a weist der Wischerarm 16 zwei Luftauströmungsöffnungen 40 auf, jedoch ragt das untere Luftleitelement 38, wie auch in Figur 3, über die Kante des Vorderschenkels 28 hinaus, so daß das Wischblatt 18 fast vollständig durch das untere Luftleitelement 38 abgedeckt wird und eine trichterartige Lufteinströmungsöffnung 42 bildet.

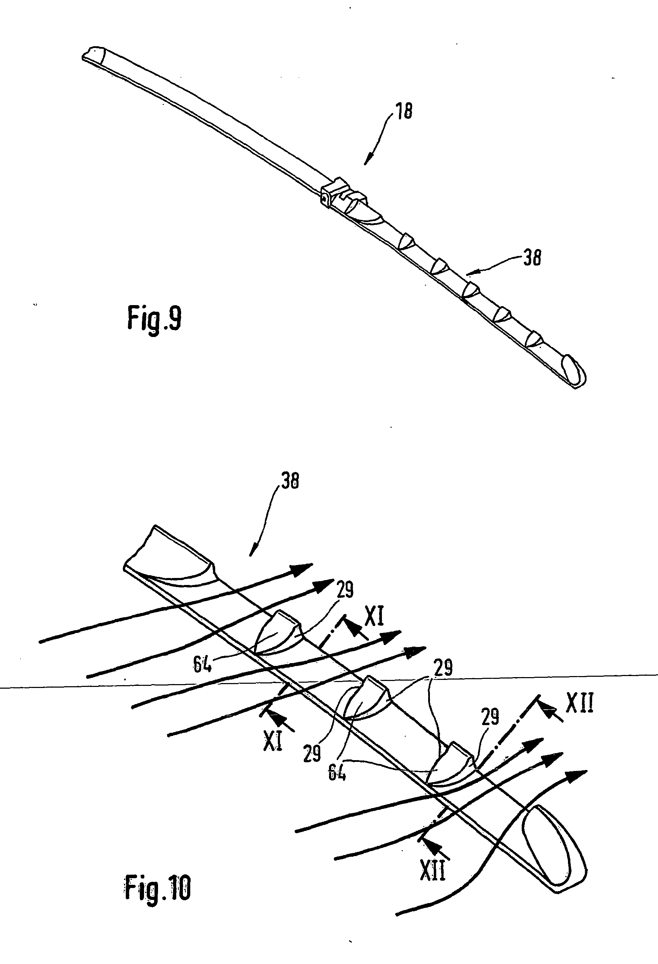

Figur 9 zeigt ein erfindungsgemäßes Wischblatt 18 in einer perspektivischen Darstellung. Hier sind die unteren Luftleitelemente 38 nicht am Wischerarm 16 sondern am Wischblatt 18 befestigt.

Wie in Figur 8b bereits dargestellt, besteht das Wischblatt 18 im wesentlichen aus einem Wischgummi 58, dessen Blattrücken 60 mittels einer Federschiene 62 verstärkt ist. An der Federschiene 62 sind die unteren Luftleitelemente 38 befestigt, beispielsweise angeklipst. Diese können prinzipiell auch am Wischgummi 58, im Bereich des Blattrückens 60 befestigt werden oder einstückig aus dem Wischgummi 58 im Extruder geformt sein. Außerdem ist es denkbar, auf die Federschiene 62 zu verzichten. Dies kann beispielsweise durch eine entsprechende Gummimischung im Bereich des Blattrückens 60 des Wischgummis 58 erreicht werden.

In Figur 10 ist das untere Luftleitelement 38 zu sehen, wie es auf die Federschiene 62 aufgeklipst ist. Dieses Luftleitelement 38 besteht aus einer Platte, auf die keilförmige, gegen die Strömungsrichtung spitz zulaufende Aufsätze 64 angeordnet sind. Die Seitenwände 29 der keilförmigen Aufsätze 64 sind dabei so geformt, dass ein optimaler Strömungsverlauf von der eintretenden Luft in Richtung der Luftausströmungsöffnungen 40 des Wischerarms 60 erzielt wird.

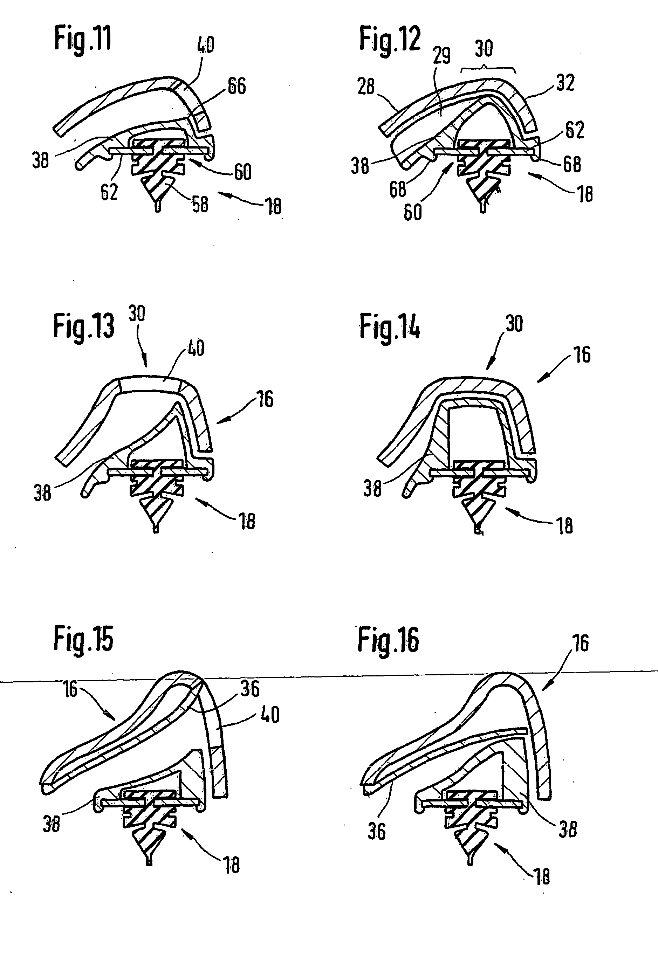

In Figur 11 ist ein Querschnitt durch ein solches Luftleitelement 38 mit einem Wischerarm 16 dargestellt. Das Luftleitelement 38 ist an der Federschiene 62 im Bereich des Blattrückens 60 des Wischgummis 58 mittels Clipselementen 62 angeklipst. Natürlich kann das Luftleitelement 38 auch mittels Kleben, Verrasten oder Ultraschall-Verprägen am Blattrücken 60 befestigt werden. Der hier gezeigte Schnitt ist im Bereich der Luftausströmungsöffnung 40 angeordnet, wie dies in Figur 10 gezeigt ist.

An der dem Wischblatt zugewandten Kante der Luftausströmungsöffnung 40 weist das Luftleitelement 38 eine Abrißkante 66 zur Verbesserung des Strömungsverlaufs auf. Dadurch findet der Strömungsabriß des Fahrtwindes am Wischblatt 18 und nicht am Wischerarm 16 statt, so daß ein Abheben des Wischblattes 18 vermieden wird.

In Figur 12 ist derselbe Querschnitt wie in Figur 11 dargestellt, jedoch in einem Bereich, in dem der Wischerarm 16 keine Luftausströmungsöffnung 40 aufweist. Das Luftleitelement 38 reicht hierbei bis zum Rücken 30 und teilt den Luftstrom durch die Seitenwände 29 entzwei, so daß die Strömung durch die Luftausströmungsöffnungen 40 entweichen kann.

In Figur 13 ist eine Variation der Anordnung aus Figur 11 gezeigt. Die Luftausströmungsöffnung 40 befindet sich im Bereich des Rückens 30 des Wischerarms 16 und das untere Luftleitelement 38 ist so geformt, dass der Luftstrom des Fahrtwindes in Richtung der Luftausströmungsöffnung 40 im Rücken 30 gelenkt wird.

In Figur 14 ist dazu korrespondierend der Bereich ohne Luftausströmungsöffnung 40 des Wischerarms gezeigt. Hierbei ist das Luftleitelement 38 im Wesentlichen kastenförmig ausgebildet und verschließt das Innere des Wischerarms 16.

In Figur 15 ist eine Weiterbildung der in Figur 11 gezeigten Anordnung gezeigt. Zusätzlich zum unteren, am Wischblatt 18 befestigten Luftleitelement 38 ist hier ein oberes Luftleitelement 36 im Wischerarm 16 befestigt. Dies kann beispielsweise durch eine Clipsverbindung realisiert werden.

Somit wird der Luftstrom besser und turbulenzärmer in Richtung der Luftausströmungsöffnung 40 gelenkt.

In Figur 16 ist der Wischerarm 16 mit dem oberen Luftleitelement 36 für den Bereich gezeigt, in dem keine Luftausströmungsöffnung 40 vorgesehen ist. Das obere Luftleitelement 38 ist nach unten, in Richtung des Wischblatts 18 verlagert und berührt fast die Oberkante des unteren Luftleitelements 36, das an dieser Stelle erhöht ist und die Strömung zu den Seiten hin aufteilt.

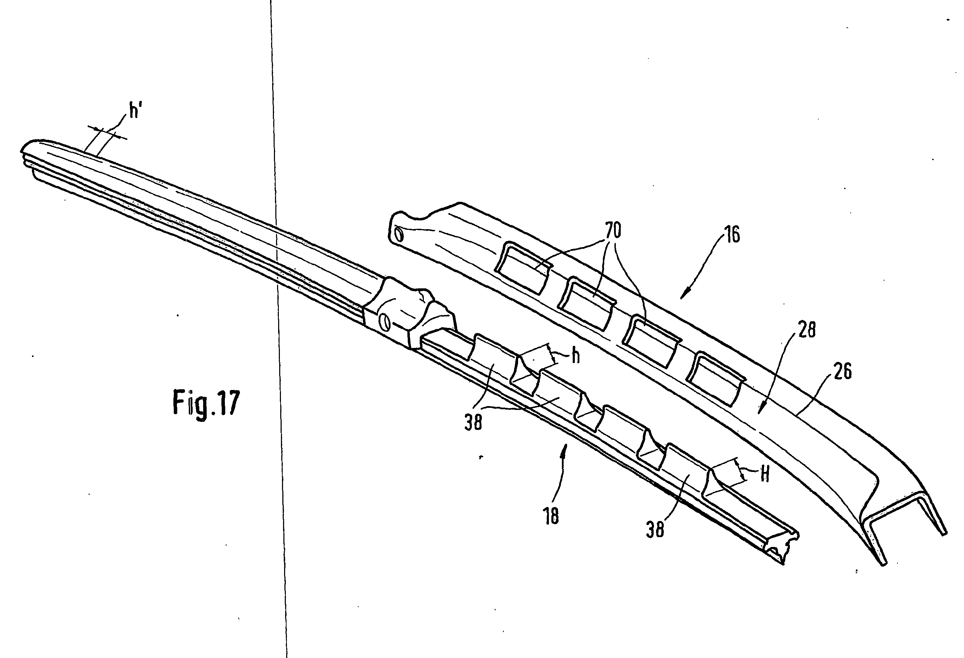

In Figur 17 ist eine weitere Variation des erfindungsgemäßen Wischerarms 16 mit einem Wischblatt 18 in perspektivischer Darstellung gezeigt.

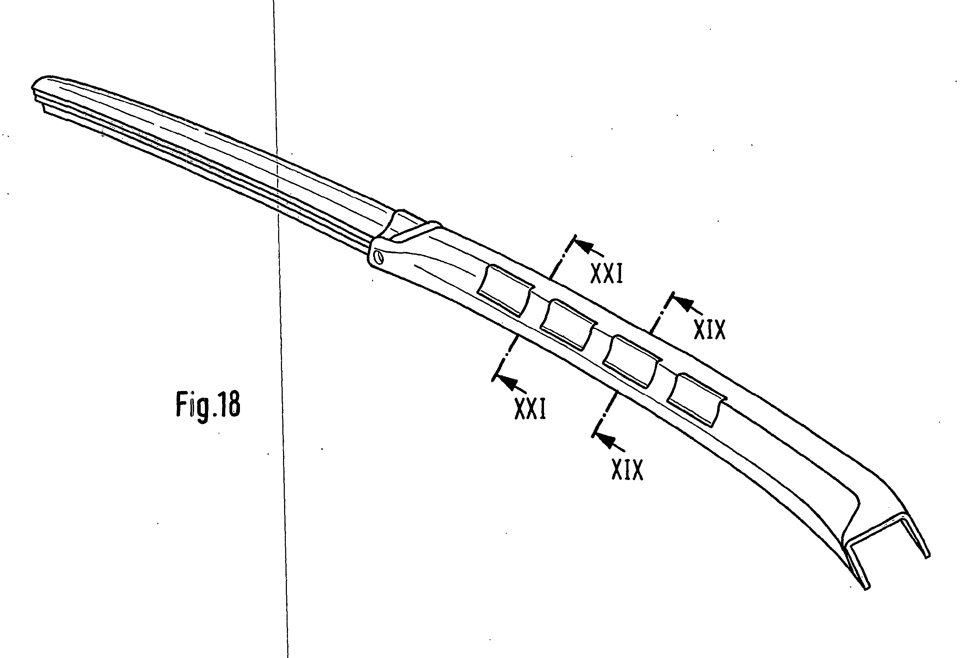

Der Wischerarm 16 besteht im Wesentlichen aus einem im Wesentlichen U-förmigen Profilteil 26, an welchem das Wischblatt 18 anlenkbar ist. Das Wischblatt 18 weist im Bereich seines Blattrückens 60 Luftleitelemente 38 auf, die so ausgebildet sind, dass sie ins Innere des Profilteils 26 eindringen, wenn der Wischerarm 16 mit dem Wischblatt 18 verbunden ist. Zur Erhöhung der Auflagekraft, mit der das Wischblatt 18 auf die Scheibe 20 gedrückt wird, weist der Vorderschenkel 28 des Profilteils 26 Anströmöffnungen 70 auf, in die die Luftleitelemente 38 des Wischblattes 18 in montierter Position eindringen und eine im Wesentlichen glatte Oberfläche mit dem Vorderschenkel 28 bildet. Dies ist in Figur 18 dargestellt.

Die Höhe der am Wischblatt 18 befestigten unteren Luftleitelemente 38 ist dabei von der Geometrie des Wischerarms 16 bestimmt. Typischerweise ist die Innenhöhe H im Bereich des Endes des Wischblattes 18 das vom Wischerarm 16 überdeckt ist größer als die Außenhöhe h im Bereich der Befestigung des Wischblattes 18 am Wischerarm 16 oder gar der Randhöhe h' am Wischerarm 16 abgewandten Ende des Wischblattes 18.

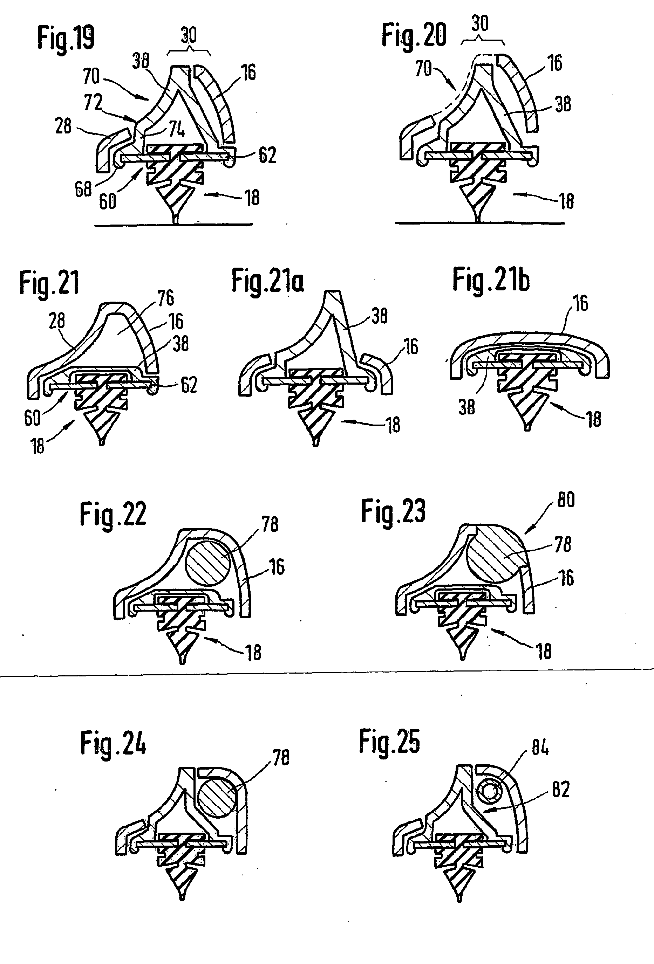

Figur 19 zeigt nun einen Schnitt durch den Wischerarm 16 mit dem Luftleitelement 38 aus Figur 18. Der Wischerarm 16 weist im Bereich seines Vorderschenkels 28 die Anströmöffnung 70 auf. In diese Anströmöffnung 70 tritt das im Bereich des Blattrückens 60 befestigte Luftleitelement 38 ein, so dass sich eine im Wesentlichen glatte Fläche ergibt.

Dazu ist das untere Luftleitelement 38 von im Wesentlichen umgekehrt V-förmiger Gestalt. Auf seiner strömungszugewandten Seite weist das Luftleitelement 38 ein Knie 72 auf, an das sich eine Stelze 74 anschließt. An dieser Stelze ist dann das Clipselement 68 angeordnet, welches das Luftleitelement 38 mit der Federschiene 62 des Blattrückens 60 verbindet. Durch die Stelze 74 ergibt sich ein glatter Verlauf zwischer Vorderschenkel 28 und der angeströmten Fläche des Luftleitelements 38.

Das Wischblatt 18 ist innerhalb des Profilteils 26 des Wischerarms 16 in vertikaler Richtung beweglich, um verschiedene Geometrien der Windschutzscheibe 20 auszugleichen. Um diese Hubbewegung zu ermöglichen erstreckt sich die Anströmöffnung 70 des Wischerarms 16 bis über den Rücken 30 des Profilteils 26 hinaus. Dies ist in Figur 20 nochmals dargestellt.

Figuren 21a und 21 b zeigen eine Variation der Erfindung. Der Wischerarm 16 kann in den Stabilitätsbereichen, zwischen den Anströmöffnungen 70 auch flach ausgebildet sein und sich im Querschnitt etwa parallel beziehungsweise nur leicht konvex gebogen zum Blattrücken 60 erstrecken (Figur 21b). Bei dieser Ausbildung ragen die Luftleitelemente 38 dann entlang der Längserstreckung des Wischerarms 16 kamm- oder zahnartig aus dem Wischerarm 16 hervor (Figur 21a).

In Figur 21 ist der Bereich des Wischerarms 16 gezeigt, in dem keine Anströmöffnung 70 vorgesehen ist. In diesem Bereich ist das Luftleitelement 38 degeneriert, d.h. nur als Platte ausgebildet, die etwa parallel zur Federschiene 60 angeordnet ist und nur der Stabilität des Systems dient.

In diesem Bereich ergibt sich ein Hohlraum 76 innerhalb des Wischerarms, der sich zur Anordnung von Düsen 78 eignet, durch die Reinigungsflüssigkeit auf die Windschutzscheibe 20 gesprüht werden kann. Dies ist in Figur 22 dargestellt.

Die Düsen 78 können dabei wie in Figur 22 angedeutet, entweder direkt aus dem Wischerarm 16 sprühen, oder wie in Figur 23 gezeigt, durch eine Spritzöffnung 80 hindurch auf die Windschutzscheibe 20 sprühen. In den Bereichen, in denen das Luftleitelement 38 durch die Anströmöffnung 70 durchtritt, kann dieses auch mittels eines weiteren Knies 82 so ausgebildet sein, dass auch hier ein Reinigungsflüssigkeitskanal 84 angeordnet werden kann. Auch eine Stromzuführung für eine Düse 78, eine Reinigungsflüssigkeitskanalheizung oder eine Düse 78 selbst könnnen hier angeordnet werden, wie dies in den Figuren 24 und 25 dargestellt ist. Insbesondere Düsen 78 mit Rückschlagventil, die eine große Bauform aufweisen.

## Patentansprüche

1. Wischvorrichtung, insbesondere für Scheiben von Kraftfahrzeugen, mit einem antreibbar gelagerten Wischerarm (16), an den ein Wischblatt (18) anlenkbar ist, wobei der Wischerarm (16) von einem, im wesentlichen U-förmigen Profilteil (26) gebildet ist, welches einen als Spoiler ausgebildeten Vorderschenkel (28) aufweist, der in Einbaulage im wesentlichen in Vorwärtsrichtung des Fahrzeugs weist und einen Hinterschenkel (32) und einen Rücken (30) aufweist, wobei mindestens eine Luftausströmungsöffnung (40) im Profilteil (26) angeordnet ist, wobei der Wischerarm (16) mit einer Auflagekraft auf die Scheibe gedrückt ist und im Betrieb einem Fahrtwind ausgesetzt ist, **dadurch gekennzeichnet, dass** wenigstens im Innenbereich (34) des U-förmigen Profilteils mindestens ein Luftleitelement (36, 38) vorgesehen ist, so dass durch einen Strömungsverlauf des Fahrtwindes die Auflagekraft des Wischerarms (16) erhöht wird.

2. Wischvorrichtung nach Anspruch 1, **dadurch gekennzeichnet, dass** die wenigstens eine Luftausströmungsöffnung (40) im, dem Spoiler abgewandten Hinterschenkel (32) des U-förmigen Profilteils (26)angeordnet ist.

3. Wischvorrichtung nach einem der vorhergehenden Ansprüche, **dadurch gekennzeichnet, dass** wenigstens ein Luftleitelement (36, 38) über eine von den Kanten der Schenkel (28, 32) des U-förmigen Profilteils (26) gebildete Ebene hinausragt.

4. Wischvorrichtung nach Anspruch 3, **dadurch gekennzeichnet, dass** das hinausragende Luftleitelement (38) an seinem hinausragenden Bereich eine weiche Gummilippe (46) entlang seiner Längserstreckung aufweist.

5. Wischvorrichtung nach einem der vorhergehenden Ansprüche, **dadurch gekennzeichnet, dass** die Luftleitelemente (36, 38) derart angeordnet sind, dass der Strömungsquerschnitt einer Lufteinströmungsöffnung (42) kleiner ist als der Strömungsquerschnitt der Luftausströmungsöffnung (40).

6. Wischvorrichtung nach einem der vorhergehenden Ansprüche, **dadurch gekennzeichnet, dass** zumindest ein Luftleitelement (36, 38) in Einbaulage im der Strömungsrichtung (22) zugewandten Bereich näher an der zu wischenden Fläche ist als im der Strömungsrichtung abgewandten Bereich.

7. Wischvorrichtung nach einem der vorhergehenden Ansprüche, **dadurch gekennzeichnet, dass** die Luftteitelemente (36, 38) derart angeordnet sind, dass die durchströmende Luft beschleunigt wird.

8. Wischvorrichtung nach einem der vorhergehenden Ansprüche, **dadurch gekennzeichnet, dass** mindestens eine Luftausströmungsöffnung (40) im Rücken (30) des U-förmigen Profilteils (26) angeordnet ist.

9. Wischvorrichtung nach einem der vorhergehenden Ansprüche, **dadurch gekennzeichnet, dass** mindestens zwei Luftausströmungsöffnungen (40) vorgesehen sind und mindestens eine Luftausströmungsöffnung (40) im Hinterschenkel (32) und mindestens eine weitere im Rücken (30) angeordnet ist.

10. Wischvorrichtung nach einem der vorhergehenden Ansprüche, **dadurch gekennzeichnet, dass** die Luftleitelemente (36, 38) als Spritzgussteil ausgebildet sind.

11. Wischvorrichtung nach einem der vorhergehenden Ansprüche, **dadurch gekennzeichnet, dass** das mindestens eine Luftleitelement (36, 38) in das Profilteil (26) eingeclipst oder eingeklebt ist.

12. Wischvorrichtung nach einem der vorhergehenden Ansprüche, **dadurch gekennzeichnet, dass** das mindestens eine Luftleitelement (36, 38) mindestens einen Ansatz zur Führung des Wischblatts (18) aufweist.

13. Wischvorrichtung nach einem der vorhergehenden Ansprüche, **dadurch gekennzeichnet, dass** das mindestens eine Luftleitelement (36, 38) einen trichterartigen Kanal bildet.

14. Wischerarm, insbesondere für eine Wischvorrichtung nach einem der vorhergehenden Ansprüche, mit mindestens einem im wesentlichen U-förmigen Profilteil (26), an das ein Wischblatt (18) anlenkbar ist, **dadurch gekennzeichnet, dass** zumindest im Innenbereich (34) des U-förmigen Profilteils (26) mindestens ein Luftleitelement (36, 38) vorgesehen ist.

15. Wischerarm nach Anspruch 14, **dadurch gekennzeichnet, dass** mindestens eines der Luftleitelemente (36, 38) vom Wischblatt (18) getragen ist.

16. Wischerarm nach Anspruch 15, **dadurch gekennzeichnet, dass** das Profilteil (26) im Bereich seines Vorderschenkels (28) mindestens eine Anströmöffnung (70), zur Aufnahme von vom Wischblatt (18) getragenen Luftleitelementen (36, 38) aufweist.

17. Wischerarm nach Anspruch 16, **dadurch gekennzeichnet, dass** mindestens eines der Luftleitelemente (36, 38) etwa bündig mit dem Vorderschenkel (28), insbesondere zu einer im wesentlichen ebenen Oberfläche abschließt.

18. Wischerarm nach einem der Ansprüche 14 bis 17, **dadurch gekennzeichnet, dass** das Profilteil (26) entlang seiner Längserstreckung mehrere Anströmöffnungen (70) aufweist.

19. Wischerarm nach einem der Ansprüche 14 bis 18, **dadurch gekennzeichnet, dass** Düsen (78) zum Austritt von Reinigungsflüssigkeit im Bereich des Hinterschenkels (32) angeordnet sind.

20. Wischblatt (18) mit mindestens einem Wischgummi, mindestens einem Blattrücken (60) und mindestens einem Befestigungsabschnitt zur Befestigung an einem Wischerarm (16), **dadurch gekennzeichnet, dass** der Blattrücken (60) mindestens ein unteres Luftleitelement (36) trägt, welches mit einem am oder im Wischerarm (16) angeordneten oberen Luftleitelement (38) zusammenwirkt.

21. Wischblatt (18) nach Anspruch 20, **dadurch gekennzeichnet, dass** das untere Luftleitelement (36) durch das Profilteil (26) des Wischerarms (16), insbesondere durch dessen Vorderschenkel (28) durchzutreten vermag.

22. Wischblatt (18) nach einem der Ansprüche 20 und 21, **dadurch gekennzeichnet, dass** der Blattrücken (60) mehrere Luftleitelemente (36) entlang der Längserstreckung des Wischblatts (18) trägt.

## Claims

1. Wiper device, in particular for windows of motor vehicles, having a wiper arm (16) which is mounted driveably and on which a wiper blade (18) can be articulatedly mounted, the wiper arm (16) being formed by a substantially U-shaped profiled section (26), which has a front limb (28) which is designed as a spoiler and, in the installed position, faces substantially in the forward direction of the vehicle, and has a rear limb (32) and a spine (30), at least one air outflow opening (40) being arranged in the profiled section (26), the wiper arm (16) being pressed against the window by a bearing force and being subjected to a slipstream, **characterized in that** at least one air-guidance element (36, 38) is provided at least in the inner region (34) of the U-shaped profiled section so that the bearing force of the wiper arm (16) is increased by a flow profile of the slipstream.

2. Wiper device according to Claim 1, **characterized in that** the at least one air outflow opening (40) is arranged in the rear limb (32), which is remote from the spoiler, of the U-shaped profiled section (26).

3. Wiper device according to one of the preceding claims, **characterized in that** at least one air-guidance element (36, 38) projects beyond a plane which is formed by the edges of the limbs (28, 32) of the U-shaped profiled section (26).

4. Wiper device according to Claim 3, **characterized in that** the projecting air-guidance element (38), at its projecting region, has a soft rubber lip (46) running along its longitudinal extent.

5. Wiper device according to one of the preceding claims, **characterized in that** the air-guidance elements (36, 38) are arranged in such a manner that the cross section of flow of one air inflow opening (42) is smaller than the cross section of flow of the air outflow opening (40) .

6. Wiper device according to one of the preceding claims, **characterized in that** at least one air-guidance element (36, 38), in the installed position, is closer to the surface which is to be wiped in the region which faces the direction of flow (22) than in the region which is remote from the direction of flow.

7. Wiper device according to one of the preceding claims, **characterized in that** the air-guidance elements (36, 38) are arranged in such a manner that the air flowing through is accelerated.

8. Wiper device according to one of the preceding claims, **characterized in that** at least one air outflow opening (40) is arranged in the spine (30) of the U-shaped profiled section (26).

9. Wiper device according to one of the preceding claims, **characterized in that** at least two air outflow openings (40) are provided, and at least one air outflow opening (40) is arranged in the rear limb (32) and at least one further air outflow opening (40) is arranged in the spine (30).

10. Wiper device according to one of the preceding claims, **characterized in that** the air-guidance elements (36, 38) are designed as injection moldings.

11. Wiper device according to one of the preceding claims, **characterized in that** the at least one air-guidance element (36, 38) is clipped or adhesively bonded into the profiled section (26).

12. Wiper device according to one of the preceding claims, **characterized in that** the at least one air-guidance element (36, 38) has at least one shoulder for guiding the wiper blade (18).

13. Wiper device according to one of the preceding claims, **characterized in that** the at least one air-guidance element (36, 38) forms a funnel-like passage.

14. Wiper arm, in particular for a wiper device according to one of the preceding claims, having at least one substantially U-shaped profiled section (26), on which a wiper blade (18) can be articulatedly mounted, **characterized in that** at least one air-guidance element (36, 38) is provided at least in the inner region (34) of the U-shaped profiled section (26).

15. Wiper arm according to Claim 14, **characterized in that** at least one of the air-guidance elements (36, 38) is supported by the wiper blade (18).

16. Wiper arm according to Claim 15, **characterized in that** the profiled section (26), in the region of its front limb (28), has at least one leading opening (70), for receiving air-guidance elements (36, 38) which are supported by the wiper blade (18).

17. Wiper arm according to Claim 16, **characterized in that** at least one of the air-guidance elements (36, 38) ends approximately flush with the front limb (28), in particular to form a substantially planar surface.

18. Wiper arm according to one of Claims 14 to 17, **characterized in that** the profiled section (26) has a plurality of leading openings (70) along its longitudinal extent.

19. Wiper arm according to one of Claims 14 to 18, **characterized in that** nozzles (78) are arranged in the region of the rear limb (32) for discharging cleaning fluid.

20. Wiper blade (18) having at least one wiper rubber, at least one blade spine (60) and at least one securing section for securing it to a wiper arm (16), **characterized in that** the blade spine (60) bears at least one lower air-guidance element (36), which interacts with an upper air-guidance element (38) arranged on or in the wiper arm (16).

21. Wiper blade (18) according to Claim 20, **characterized in that** the lower air-guidance element (36) is able to pass through the profiled section (26) of the wiper arm (16), in particular through its front limb (28).

22. Wiper blade (18) according to one of Claims 20 and 21, **characterized in that** the blade spine (60) bears a plurality of air-guidance elements (36) along the longitudinal extent of the wiper blade (18).

## Revendications

1. Dispositif d'essuyage notamment pour les vitres de véhicule, comportant un bras d'essuie-glace (16) monté de manière entraînée et auquel est articulé un balai d'essuie-glace (18),
le bras (16) étant formé par une pièce profilée (26) ayant principalement une forme en U munie d'une branche avant (28) en forme de déflecteur qui, en position de montage est principalement tournée dans la direction avant du véhicule et une branche arrière (32) ainsi qu'un dos (30), et avec au moins un orifice de passage d'air (40) prévu dans la pièce profilée (26),
le bras d'essuie-glace (16) poussé contre la vitre par une force d'application étant exposé au vent de circulation pendant son fonctionnement,
**caractérisé en ce qu'**
au moins dans la zone intérieure (34) de la pièce profilée en forme de U, au moins un élément de guidage d'air (36, 38) provoque un trajet d'écoulement du vent de circulation qui augmente la force d'application du bras d'essuie-glace (16).

2. Dispositif d'essuyage selon la revendication 1,
**caractérisé par**
au moins un orifice de sortie d'air (40) dans la branche arrière (32) de la pièce profilée (26) en forme de U, du côté opposé au déflecteur.

3. Dispositif d'essuyage selon l'une quelconque des revendications précédentes,
**caractérisé par**
au moins un élément de guidage d'air (36, 38) qui déborde dans le plan formé par les arêtes des branches (28, 32) de la pièce profilée (26) en forme de U.

4. Dispositif d'essuyage selon la revendication 3,
**caractérisé en ce que**
l'élément de guidage d'air (38) qui dépasse présente dans sa zone de dépassement, une lèvre en caoutchouc souple (46) suivant son extension longitudinale.

5. Dispositif d'essuyage selon l'une quelconque des revendications précédentes,
**caractérisé en ce que**
les éléments de guidage d'air (36, 38) sont installés pour que la section d'écoulement d'un orifice d'entrée d'air (42) soit inférieure à la section d'écoulement de l'orifice de sortie d'air (40).

6. Dispositif d'essuyage selon l'une quelconque des revendications précédentes,
**caractérisé par**
au moins un élément de guidage d'air (36, 38) qui, en position de montage, a sa zone tournée vers la direction d'écoulement (22) plus près de la surface à essuyer que la zone non tournée vers la direction d'écoulement.

7. Dispositif d'essuyage selon l'une quelconque des revendications précédentes,
**caractérisé en ce que**
les éléments de guidage d'air (36, 38) sont installés pour accélérer l'air qui passe.

8. Dispositif d'essuyage selon l'une quelconque des revendications précédentes,
**caractérisé en ce qu'**
au moins un orifice de sortie d'air (40) est prévu dans le dos (30) de la pièce profilée (26) en forme de U.

9. Dispositif d'essuyage selon l'une quelconque des revendications précédentes,
**caractérisé par**
au moins deux orifices de sortie d'air (40), dont au moins un orifice de sortie d'air (40) dans la branche arrière (32) et un autre dans le dos (30).

10. Dispositif d'essuyage selon l'une quelconque des revendications précédentes,
**caractérisé en ce que**
les éléments de guidage d'air (36, 38) sont réalisés sous la forme d'une pièce injectée.

11. Dispositif d'essuyage selon l'une quelconque des revendications précédentes,
**caractérisé en ce qu'**
au moins un élément de guidage d'air (36, 38) en enclipsé ou collé dans la pièce profilée (26).

12. Dispositif d'essuyage selon l'une quelconque des revendications précédentes,
**caractérisé en ce qu'**
au moins un élément de guidage d'air (36, 38) comporte au moins un prolongement pour guider le balai d'essuie-glace (18).

13. Dispositif d'essuyage selon l'une quelconque des revendications précédentes,
**caractérisé en ce qu'**
au moins un élément de guidage d'air (36, 38) forme un canal en entonnoir.

14. Bras d'essuie-glace notamment pour un dispositif d'essuyage selon l'une quelconque des revendications précédentes, ayant au moins une pièce profilée (26) principalement en forme de U à laquelle est articulé un balai d'essuie-glace (18),
**caractérisé en ce qu'**
au moins une zone intérieure (34) de la pièce profilée (26) en forme de U comporte au moins un élément de guidage d'air (36, 38).

15. Bras d'essuie-glace selon la revendication 14,
**caractérisé en ce qu'**
au moins l'un des éléments de guidage d'air (36, 38) est porté par le balai d'essuie-glace (18).

16. Bras d'essuie-glace selon la revendication 15,
**caractérisé en ce que**
la pièce profilée (26) présente au niveau de sa branche avant (28) au moins un orifice d'entrée (70) pour recevoir les éléments de guidage d'air (36, 38) portés par le balai d'essuie-glace (18).

17. Bras d'essuie-glace selon la revendication 16,
**caractérisé en ce qu'**
au moins l'un des éléments de guidage d'air (36, 38) est à niveau avec la branche avant (28) notamment par rapport à une surface essentiellement plane.

18. Bras d'essuie-glace selon l'une quelconque des revendications 14 à 17,
**caractérisé en ce que**
la pièce profilée (26) présente plusieurs orifices d'entrée (70) suivant son extension longitudinale.

19. Bras d'essuie-glace selon l'une quelconque des revendications 14 à 18,
**caractérisé en ce que**
d es buses (78) sont prévues pour la sortie du liquide de nettoyage au niveau de la branche arrière (32).

20. Bras d'essuie-glace (18) comportant au moins une lame d'essuyage, au moins un dos de lame (60) et au moins un segment de fixation pour être fixé à un bras d'essuie-glace (16),
**caractérisé en ce que**
le dos (60) de la lame porte au moins un élément de guidage d'air inférieur (36) coopérant avec un élément de guidage d'air supérieur (38) prévu sur ou dans le bras d'essuie-glace (16).

21. Balai d'essuie-glace (18) selon la revendication 20,
**caractérisé en ce que**
l'élément de guidage d'air inférieur (36) peut traverser la pièce profilée (26) du bras d'essuie-glace (16) notamment sa branche avant (28).

22. Balai d'essuie-glace (18) selon l'une quelconque des revendications 20 et 21,
**caractérisé en ce que**
le dos (60) de la lame comporte plusieurs éléments de guidage d'air (36) répartis suivant l'extension longitudinale du balai d'essuie-glace (18).
